# DEMANDE DE BREVET EUROPEEN

(11) **EP 2 857 084 A1**
(43) Date de publication de la demande: **08.04.2015**
(21) Numéro de dépôt: 14187338.0
(22) Date de dépôt: 01.10.2014
(51) Int. Cl.: B01D 53/94, B01J 37/02, B01J 29/68, B01J 29/76, F01N 3/20, F01N 3/28

(54) **Dispositif de traitement des gaz d' échappement**

(30) Priorité: 07.10.2013 FR 1359676
(71) Demandeur: PEUGEOT CITROËN AUTOMOBILES SA, 78140 Velizy-Villacoublay (FR); IRMA, 56274 Ploemeur Cedex (FR)
(72) Inventeur: Hamon, Christian, 44600 Saint Nazaire (FR); Blanchard, Gilbert, 92100 Boulogne Billancourt (FR)

(57) **Abrégé**

L'invention porte sur un dispositif de traitement des gaz d'échappement circulant dans une ligne d'échappement d'un moteur thermique, caractérisé en ce qu'il comprend un substrat poreux enduit et/ou imprégné de composition(s) catalytique(s) associant une zéolithe de structure chabazite sous forme acide échangée ou imprégnée au cuivre et/ou au fer et une zéolithe de structure ferriérite sous forme acide échangée ou imprégnée au cuivre et/ou au fer.

## Description

La présente invention se rapporte au domaine du traitement des gaz d'échappement émis par les moteurs thermiques, notamment ceux équipant des véhicules du type véhicule automobile. Il s'agit notamment de véhicules équipés de moteurs diesel, fonctionnant en mélange pauvre, mais également éventuellement des véhicules équipés de moteurs essence.

Depuis longtemps, les constructeurs de véhicules automobiles à moteur thermique cherchent à réduire l'émission dans l'atmosphère de polluants produits par les moteurs thermiques lors de la combustion du carburant. Parmi ces composés, on trouve les oxydes d'azote, principalement le monoxyde NO et le dioxyde NO₂ d'azote, désignés ensemble sous l'abréviation NOₓ.

Une technique connue pour éliminer les NOₓ consiste à réduire chimiquement ces composés : c'est la réduction catalytique sélective, désignée sous l'acronyme anglais SCR (pour «Selective Catalytic Reduction» en anglais). Cette technique consiste à ajouter dans la ligne d'échappement des gaz de combustion du moteur thermique un dispositif catalytique de réduction des NOₓ, en amont ou en aval d'un filtre à particules, ou encore à l'intégrer au filtre à particules.

Le dispositif catalytique comprend d'une part une composition catalytique spécifique à laquelle est associé un agent réducteur, généralement de l'ammoniac : on vient injecter l'agent réducteur dans la ligne d'échappement en amont du dispositif catalytique, soit directement sous forme gazeuse (ammoniac gazeux), soit sous forme d'un précurseur liquide se décomposant en agent réducteur sous l'effet de la chaleur (par exemple de l'urée en phase aqueuse se décomposant en ammoniac gazeux). Le réducteur peut aussi être généré in situ sur la ligne d'échappement.

Le dispositif catalytique comprend d'autre part une matrice poreuse, généralement en céramique, sur laquelle on vient déposer la composition catalytique, par enduction ou imprégnation des parois de la matrice.

La matrice peut être sous forme d'un pain de mousse en céramique, d'un tamis en toile métallique. Elle peut aussi être constituée par la matrice du filtre à particules comme mentionné ci-dessus : les filtres à particules (désignés aussi dans le présent texte sous l'acronyme FAP par soucis de concision) présentent une structure formée d'un grand nombre de canaux fermés alternativement pour que les gaz d'échappement chargés de particules soient obligés de passer à travers les parois poreuses du corps en forme de nid d'abeille. Un tel filtre peut être en céramique, par exemple en cordiérite, en carbure de silicium ou en titanate d'aluminium.

On connaît du brevet EP-2 409 760 un système SCR intégré dans un filtre à particules d'une ligne d'échappement pour traiter les gaz d'échappement d'un moteur thermique, en imprégnant les parois du filtre avec une composition catalytique SCR contenant une zéolithe à base de ferriérite sous forme acide contenant du fer, qui s'est révélée tout-à-fait efficace vis-à-vis des NOx.

Cependant, il s'est avéré qu'il existait également dans les gaz d'échappement qui traversaient le filtre d'autres gaz azotés qui pouvaient être considérés comme gênants, même en très faible quantité. Il s'agit notamment du protoxyde d'azote N₂O, qui provoque dans l'atmosphère un effet de serre significatif. Or, le système SCR à base de ferriérite échangé au fer mentionné plus haut n'a présenté a priori aucune influence notable vis-à-vis de la réduction du taux de protoxyde d'azote des gaz d'échappement traversant le système SCR (sachant que le N₂O peut être généré dans le moteur même, lors de la combustion et/ou lors du cheminement des gaz dans la ligne d'échappement qui peut être équipée d'une pluralité de dispositifs de traitement des gaz, dont, notamment un catalyseur d'oxydation).

On connaît par ailleurs de la demande de brevet EP -1 918 016 un catalyseur à base de zéolithe analogue, de type ferriérite échangée au fer, qui est présenté comme ayant une action à la fois vis-à-vis des NOx et du N₂O (protoxyde d'azote) pour traiter les effluents gazeux provenant de la production d'acide nitrique ou d'oxydation nitrique dans le domaine de la synthèse organique. Mais les conditions d'utilisation sont très différentes : ici, il s'agit de traiter des effluents gazeux contenant un fort taux de protoxyde gazeux, et qui sont émis à une température et un débit, notamment, contrôlés, ce qui n'est pas du tout le cas des gaz d'échappement de moteur thermique d'un véhicule.

Enfin, on connaît de la demande de brevet WO 2009/099937 la synthèse d'un catalyseur à base de zéolithe de structure chabazite échangée au cuivre pour traiter les NOx de gaz d'échappement. Au sens strict du terme, les zéolithes ne contiennent pas de phosphore, mais ici la chabazite utilisée selon l'invention présente une structure de type zéolithe, c'est-à-dire une structure très proche/analogue à celle d'une zéolithe.

Le but de l'invention est la mise au point d'un dispositif de traitement des gaz d'échappement qui puisse traiter efficacement à la fois les NOx et le N₂O. Accessoirement, le but de l'invention est de concevoir un tel dispositif qui soit compact et/ou qui puisse être fabriqué et mis en oeuvre sans difficultés supplémentaires par rapport à un dispositif dédié aux NOx. Sont plus particulièrement visées les compositions catalytiques pour équiper les lignes d'échappement de moteurs thermiques, notamment des moteurs Diesel ou à essence à injection directe essence stratifié (mélange pauvre), sans exclure cependant les moteurs essences à injection indirecte.

L'invention a tout d'abord pour objet un dispositif de traitement des gaz d'échappement circulant dans une ligne d'échappement d'un moteur thermique, qui comprend un substrat poreux enduit et/ou imprégné de composition(s) catalytique(s) associant une zéolithe de structure chabazite sous forme acide échangée ou imprégnée au cuivre et/ou au fer et une zéolithe de structure ferriérite sous forme acide échangée ou imprégnée au cuivre et/ou au fer.

Au sens strict du terme, les zéolithes ne contiennent pas de phosphore, mais ici la chabazite utilisée selon l'invention présente une structure de type zéolithe, c'est-à-dire une structure très proche de /analogue à celle d'une zéolithe.

Il s'est avéré que cette association au sein d'un même dispositif de traitement était extrêmement avantageuse, et révélait une synergie particulièrement intéressante entre les deux compositions catalytiques. En effet, si les deux zéolithes étaient connues pour leur action vis-à-vis des NOx, rien ne laissait à penser que les associer permettrait de conserver la performance de réduction des NOx de chacune des zéolithes et d'éviter le rejet dans l'atmosphère de quantités significatives de protoxyde d'azote. Les mécanismes impliqués par cette réduction et cette décomposition, et l'interaction entre les deux zéolithes qui aboutissent à ce résultat, ne sont pas parfaitement éclaircis.

Il est ainsi apparu que cette combinaison particulière permet, même pour des températures très élevées, au-delà de 800°C, à la bis de limiter la dégradation des performances vis-à-vis de la réduction des NOx et de limiter la formation de N₂O. La combinaison selon l'invention présente ainsi une remarquable stabilité thermique dans ses performances, ce qui est très avantageux, car il est nécessaire que ces matériaux catalyseurs soient aptes à subir d'éventuelles montées momentanées en température des gaz d'échappement (par exemple lors des phases de régénération thermique du filtre à particules), et présentent également une durée de vie suffisante à température de fonctionnement standard.

Une explication de cette stabilité thermique est que ces deux matériaux seraient complémentaires l'un de l'autre sur toute la gamme de températures à laquelle ils sont exposés : à des température de fonctionnement standard, pour des vieillissements thermiques en-deçà de 800°C, c'est la chabazite qui serait la plus active et dont l'action sur l'élimination des NOx et la limitation de la formation de N₂O serait prédominante, la ferriérite prenant le relais pour des vieillissements thermiques au-delà de 800°C pour maintenir malgré tout un niveau de performance acceptable à ces températures de vieillissement extrêmement élevées et au retour aux températures standard de fonctionnement.

Il a été noté en outre que la ferriérite très stable thermiquement, et notamment nettement plus que d'autres zéolithes avec du fer du type de celles à structure cristalline dites zéolithes Beta -ou BEA- décrites dans la demande de brevet WO2013/050964.

Le dispositif de l'invention permet ainsi d'abaisser la teneur en N₂O des gaz d'échappement à au plus 10 ppm, et même au plus 5 ppm.

Avantageusement, le substrat selon l'invention est un filtre à particules. On a ainsi un dispositif unique qui traite à la fois les suies des gaz d'échappement et les gaz NOx et N₂O qu'ils contiennent. On peut ainsi rendre plus compacte l'installation de dépollution de la ligne d'échappement, en fonctionnalisant le filtre plutôt que d'avoir à ajouter une matrice poreuse dédiée SCR en amont ou en aval de celui-ci dans la ligne. (On comprend dans tout le présent texte les termes « entrée »/« sortie », ou encore « amont »/« aval » en référence à la direction générale d'écoulement des gaz d'échappement destinés à traverser le filtre à particules, une fois celui-ci monté sur une ligne d'échappement d'un moteur thermique, depuis la sortie moteur jusqu'à la sortie des gaz à l'air libre en bout de ligne.)

Le dispositif selon l'invention traite donc à la fois les gaz NOx et N₂O des gaz d'échappement. On a observé que ces performances étaient maintenues, même quand le dispositif est soumis à des conditions hydrothermales sévères. Cette association est donc tout particulièrement adaptée pour traiter les gaz d'échappement des moteurs thermiques, notamment du type de ceux fonctionnant en mélange pauvre, et pour s'intégrer dans des filtres à particules de moteurs Diesel ayant à subir des régénérations thermiques.

De préférence, la chabazite est de type aluminosilicate ou silico-alumino-phosphate. Quand il s'agit d'un alumino-silicate, la zéolite peut comprendre par exemple du silicium et de l'aluminium présentant un rapport atomique Si/Al compris entre 8 et 300.

De préférence encore, la chabazite est échangée ou imprégnée au cuivre. De préférence encore, la teneur en cuivre et/ou fer de la chabazite est comprise entre 1 et 10% massique, et notamment entre 1 et 3 en % massique.

De préférence, la ferriérite est échangée ou imprégnée au fer. De préférence encore, la teneur en cuivre et/ou fer de la zéolithe en ferriérite sous forme acide échangée ou imprégnée au cuivre et/ou au fer est de 0,3 à 5 %.

Avantageusement, le rapport relatif massique entre la zéolithe de structure chabazite sous forme acide échangée ou imprégnée au cuivre et/ou au fer et la zéolithe de structure ferriérite sous forme acide échangée ou imprégnée au cuivre et/ou au fer est compris entre 90/10 et 40/60, notamment entre 80/20 et 50/50.

Selon un mode de réalisation préféré, le pourcentage massique en chabazite sous forme acide échangée ou imprégnée au cuivre et/ou au fer par rapport à la somme des teneurs massiques de la chabazite sous forme acide échangée ou imprégnée au cuivre et/ou au fer et de la ferriérite sous forme acide échangée ou imprégnée au cuivre et/ou au fer est d'au moins 50%.

Avantageusement, le substrat poreux est à base de carbure de silicium ou en mélange carbure de silicium et de silice et/ou d'alumine ou à base de cordiérite (de formule Al₃Mg₂AlSi₅O₁₈), de mullite, de titanate d'aluminium ou du mélange d'au moins deux de ces composés. Ces céramiques présentent une très bonne tenue thermique.

Selon une première variante, la zéolithe de structure chabazite sous forme acide échangée ou imprégnée au cuivre et/ou au fer et la zéolithe de structure ferriérite sous forme acide échangée ou imprégnée au cuivre et/ou au fer sont associées dans une même composition catalytique, éventuellement à l'aide d'un liant minéral, notamment à base d'alumine, pour enduction/imprégnation commune du substrat poreux.

Dans ce cas de figure, on vient donc enduire/imprégner le substrat poreux avec cette unique composition, soit sur la totalité du substrat, soit une zone dédiée (par exemple une zone amont ou une zone aval, si l'on envisage de déposer d'autres compositions catalytiques ayant une autre fonction sur le substrat, afin que les gaz d'échappement entrent en contact avec chacune des compositions selon un ordre déterminé. Cette variante permet l'association la plus intime des deux éléments actifs, qui parait la plus avantageuse vis-à-vis d'une action commune vis-à-vis des NOx et du N₂O.

Selon une deuxième variante, la chabazite sous forme acide échangée ou imprégnée au cuivre et/ou au fer et la ferriérite sous forme acide échangée ou imprégnée au cuivre et/ou au fer sont contenues dans deux compositions catalytiques distinctes.

Dans ce cas de figure, on peut enduire/imprégner successivement ou en même temps les deux compositions sur le substrat poreux, et avoir donc plus de liberté dans la façon d'agencer les deux compositions dans/sur le substrat.

On peut ainsi avoir la configuration où la composition contenant la chabazite sous forme acide échangée ou imprégnée au cuivre et/ou au fer est disposée, dans le substrat poreux, au moins partiellement sous la composition contenant la ferriérite sous forme acide échangée ou imprégnée au cuivre et/ou au fer.

Selon un mode de réalisation préféré, on prévoit une première couche de ferriérite sur laquelle est déposée la couche en chabazite, dans la même zone du substrat poreux/du filtre à particules.

L'invention a également pour objet le procédé de fabrication du dispositif selon l'une des revendications précédentes, tel qu'on enduit/imprègne le substrat poreux successivement avec une première composition catalytique contenant la zéolithe de structure ferriérite sous forme acide échangée ou imprégnée au cuivre et/ou au fer puis avec une deuxième composition catalytique contenant la zéolithe de structure chabazite sous forme acide échangée ou imprégnée au cuivre et/ou au fer. En déposant successivement les deux compositions, on peut ainsi choisir de superposer les zones d'enduction/d'imprégnation, ou encore de les faire se chevaucher, ou encore de les séparer complètement. On peut faire ainsi l'enduction/l'imprégnation du substrat poreux par les deux compositions catalytiques dans des zones distinctes du substrat et/ou dans la même zone.

L'invention a également pour objet un système de traitement de gaz d'échappement produits par un moteur thermique, qui comprend au moins un dispositif tel que décrit plus haut, et de préférence des moyens d'introduction dans les gaz de combustion d'un agent réducteur ou d'un précurseur dudit agent réducteur.

L'invention a également pour objet la ligne d'échappement d'un moteur thermique, qui comprend un système de traitement des gaz d'échappement produits par ledit moteur thermique décrit plus haut. Avantageusement, la ligne d'échappement peut intégrer, de préférence en amont du dispositif selon l'invention, un dispositif catalyseur d'oxydation.

D'autres particularités et avantages apparaîtront à la lecture de la description ci-après d'un mode de réalisation, non limitatif de l'invention, faite en référence aux figures dans lesquelles :
- La figure 1 est une représentation schématique de la structure interne d'un filtre à particules,
- La figure 2 représente des graphes de performance de réduction des NOx d'un exemple selon l'invention et d'un exemple comparatif.

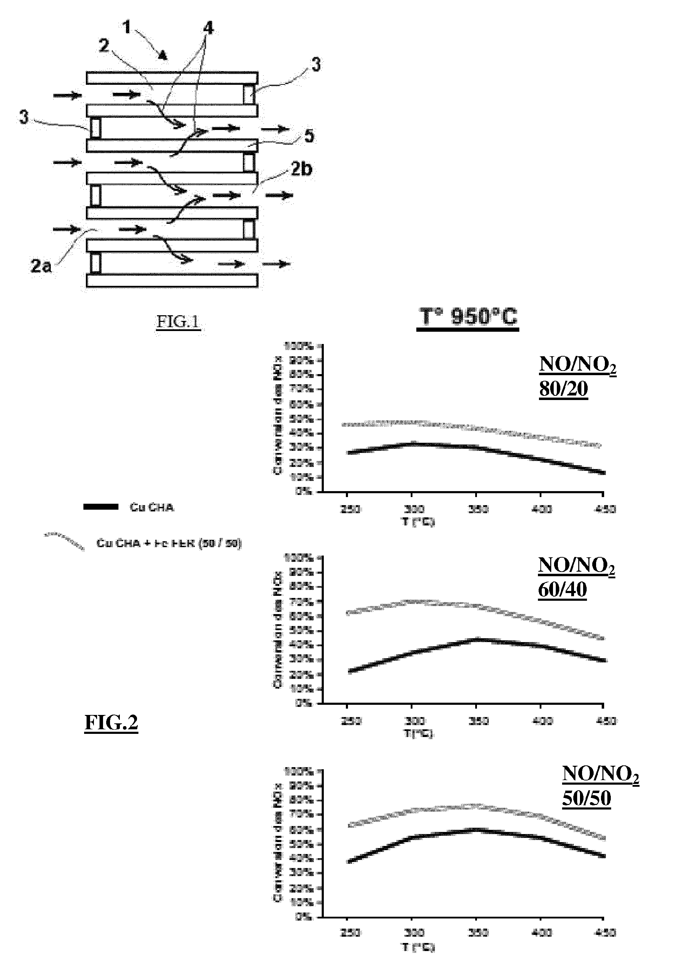

La figure 1 rappelle schématiquement la structure interne connue en soi d'un filtre 1 à particules. Un filtre à particules comprend généralement un substrat filtrant ou support céramique poreux comportant des canaux 2 parallèles. Ces derniers sont obstrués en alternance par des bouchons 3 en céramique, de manière à forcer les gaz d'échappement dont le sens de circulation est illustré par les flèches 4 à entrer par des canaux 2a d'entrée, puis traverser les parois séparatrices 5 poreuses pour ressortir par des canaux 2b de sortie des gaz d'échappement.

Le filtre à particules 1 comprend de plus une composition catalytique permettant la réduction catalytique sélective des oxydes d'azote NOx et la décomposition du protoxyde d'azote N₂O. Il permet dans une même structure interne non seulement de filtrer les particules de suie contenues dans les gaz d'échappement mais aussi de réduire plus efficacement les oxydes d'azote. On obtient donc un dispositif de traitement des gaz plus compact et plus économique puisque trois fonctions de traitement des gaz sont réunies sur un même support.

Conformément à l'invention, on constitue une composition catalytique selon l'invention associant : - un premier composé Cu/CHA de la composition catalytique selon l'invention sous forme d'une chabazite sous forme acide, où du cuivre est introduit par échange ou imprégnation des sites acides par le cuivre, et - un deuxième composant Fe/FER sous forme d'une ferriérite sous forme acide, où du fer est introduit par échange ou imprégnation des sites acides par le fer.

La composition catalytique de l'invention peut être déposée en surface sur au moins une partie des parois séparatrices 5 poreuses des canaux 2 de passage des gaz du filtre 1 à particules. La composition catalytique peut alors être déposée par un procédé d'enduction. Le substrat filtrant 1 étant poreux, au moins une partie de la composition catalytique peut aussi être déposée dans la porosité dudit substrat, autrement dit dans les parois séparatrices 5 poreuses.

En prenant comme exemple l'ammoniac comme agent réducteur, le fonctionnement est le suivant : les moyens d'introduction apportent dans les gaz de combustion l'ammoniac qui se mélange aux gaz de combustion en amont du dispositif de traitement des gaz. Les gaz de combustion comprenant l'ammoniac entrent ensuite dans le dispositif de traitement des gaz. La réaction de réduction sélective des NOₓ s'effectue alors par réaction chimique entre les oxydes d'azote contenus dans les gaz de combustion et l'ammoniac, la réaction chimique étant catalysée par la composition catalytique de l'invention. En outre les gaz de combustion traversent le substrat filtrant qui en retient les particules de suies.

### Exemple 1 (comparatif): catalyseur (A) selon l'art antérieur

On synthétise une composition catalytique (A) à base d'un catalyseur Cu/CHA de structure chabazite acide échangée ou imprégnée au cuivre seule. (On rappelle qu'une chabazite sous forme acide désigne de manière connue une zéolithe pour laquelle l'aluminium, sous forme d'ions Al⁻, est associé à de l'hydrogène sous forme d'ions H+.)

La composition catalytique (A) est synthétisée en suivant l'enseignement du document WO 2009/099937 précitée. La composition catalytique (A) est exprimée, en pourcentages massiques, en 12,5 % de SiO₂, 40% d'Al₂O₃, 44,8% de P₂O₅ et 2,7% de CuO.

Ce catalyseur (A) est déposé avec un liant dans la paroi filtrante d'un filtre à particules en carbure de silicium (SiC) de grade 300 cpsi, de diamètre 2,54 cm et de hauteur 5,08 cm, soit un volume de 25 cm³. Les parois des monolithes présentent un diamètre de pore médian de 23 µm et un volume poreux de 58%.

Le liant est une alumine de type pseudo-boehmite, et sa teneur est de 20 % en poids exprimé en Al₂O₃.

La teneur en matière active (catalyseur + liant) déposé dans la paroi filtrante est de 126 g/l.

Ce filtre à particules est séché puis traité thermiquement à 400°C.

Le catalyseur (A) est ensuite vieilli dans des conditions représentatives de l'application sur véhicule équipé d'un moteur thermique de type Diesel, en effectuant un vieillissement accéléré par un traitement thermique à 900°C pendant 5 heures sous flux d'air avec 10 % H₂O.

### Exemple 2 : catalyseur (C) selon l'Invention

Dans un premier temps, on synthétise, comme à l'exemple 1, une composition catalytique (A) à base d'un catalyseur Cu/CHA de structure chabazite acide échangée ou imprégnée au cuivre seule.

La composition catalytique (A) est synthétisée comme à l'exemple 1, en suivant l'enseignement du document WO 2009/099937 précitée. La composition catalytique (A) est exprimée, en pourcentages massiques, en 12,5 % de SiO₂, 40% d'Al₂O₃, 44,8% de P₂O₅ et 2,7% de CuO. Elle présente une structure de type zéolithique, bien que comprenant du phosphore.

Puis on synthétise une composition catalytique (B) à base d'un catalyseur Fe/FER sous forme d'une ferriérite sous forme acide de ratio Si/Al de 10, où du fer est introduit par échange des sites acides par le fer, selon l'enseignement du brevet EP 2 409 760 pré-cité. La teneur en fer exprimé en pourcentage en poids est de 1,0% dans la ferriérite.

Dans un second temps on associe dans une même composition catalytique (C) les compositions catalytiques (A) et (B) dans une proportion massique 50% en poids de (A) et 50% en poids de (B).

On procède ensuite comme à l'exemple 1 : le catalyseur (C) est déposé avec un liant dans la paroi filtrante d'un filtre à particules en carbure de silicium (SiC) de grade 300 cpsi, de diamètre 2,54 cm et de hauteur 5,08 cm, soit un volume de 25 cm³. Les parois des monolithes présentent un diamètre de pore médian de 23 µm et un volume poreux de 58%.

Le liant est une alumine de type pseudo-boehmite, et sa teneur est de 20 % en poids exprimé en Al₂O₃.

La teneur en matière active (catalyseur + liant) déposé dans la paroi filtrante est de 127 g/l.

Ce filtre à particules est séché puis traité thermiquement à 400°C.

Le catalyseur (C) est ensuite vieilli dans des conditions représentatives de l'application sur véhicule équipé du même moteur thermique de type Diesel, en effectuant un vieillissement accéléré par un traitement thermique à 900°C pendant 5 heures sous flux d'air avec 10 % H₂O.

Les catalyseurs (A) et (C) vieillis à 900°C selon les exemples 1 et 2 sont ensuite évalués par un test de réduction des oxydes d'azote en dosant en continu les teneurs en NO, NO₂ et N₂O sortie du catalyseur.

Les tests sont effectués dans un réacteur à lit fixe traversé de diamètre 1 pouce, soit 2, 54 cm, entouré de coquilles chauffantes.

Les conditions opératoires sont les suivantes pour la mesure de NO, NO₂ et N₂O :
Composition du mélange réactionnel :
   - NOₓ : 400 ppm avec NO/NO₂ ~ 1
   - O₂ : 6 % en volume
   - H₂O : 7%
   - NH₃/NOₓ : 1
   - complément à 100% par de l'azote N₂
   - Vitesse volumétrique horaire : 30 000 h⁻¹
   - Température: programmation de 150 à 450°C avec une montée en température de 5°C/minute.
   - Analyse en continu de l'effluent :
      NOₓ : NO, NO₂ : par chimiluminescence avec un analyseur TOPAZE 32M commercialisé par la société Environnement SA
      NH₃ : par l'analyseur commercialisé sous le nom FT UV par la société Environnement SA
      N₂O : par infrarouge avec un analyseur infra-rouge commercialisé sous le nom « MIR 2M » par la société Environnement SA.

Les performances des catalyseurs (A) et (C) sont définies par les deux critères suivants en fonction de la température :
- Le pourcentage (%) de conversion des NOx calculé par le ratio (NO+NO₂) entrée - (NO+NO₂) sortie / (NO+NO₂) entrée
- La teneur en N₂0 dans les gaz de sortie exprimée en ppm.

Les performances des catalyseurs (A) et (C) vieillis à 900°C sont reportées dans le tableau 1 ci-dessous :

**Tableau 1**

| Température °C | 150 | 200 | 250 | 300 | 350 | 400 | 450 |
|---|---|---|---|---|---|---|---|
| Catalyseur (A) | | | | | | | |
| % ConversionNOx | 55% | 85% | 90% | 95% | 86% | 73% | 55% |
| N₂0 ppm | 15 ppm | 18 ppm | 22 ppm | 25 ppm | 27 ppm | 24 ppm | 30 ppm |

| Catalyseur (C) | | | | | | | |
|---|---|---|---|---|---|---|---|
| % Conversion NOx | 60% | 94% | 98% | 98% | 90% | 80% | 68% |
| N₂0 ppm | 5 ppm | 6 ppm | 6 ppm | 7 ppm | 7 ppm | 6 ppm | 6ppm |

Ces résultats confirment donc que l'association des catalyseurs A et B dans la formulation C permet de maintenir le niveau de réduction des NOx, et de limiter de façon significative le taux de N₂O rejeté dans l'atmosphère également, dans une large gamme de températures.

Les mêmes mesures ont été faites sur les catalyseurs (A) et (C) vieillis cette fois à à 950 ° C : elles sont reportées dans le tableau 2 ci-dessous :

**Tableau 2**

| Température °C | 200 | 250 | 300 | 350 | 400 | 450 |
|---|---|---|---|---|---|---|
| Catalyseur (A) | | | | | | |
| % Conversion NOx | 20% | 38% | 55% | 60% | 54% | 41% |
| N₂0 ppm | 2 ppm | 8 ppm | 19 ppm | 27 ppm | 31 ppm | 31 ppm |

| Catalyseur (C) | | | | | | |
|---|---|---|---|---|---|---|
| % Conversion NOx | 88% | 95% | 90% | 86% | 75% | 60% |
| N₂0 ppm | 2 ppm | 4 ppm | 5 ppm | 5 ppm | 5 ppm | 5 ppm |

On voit que même après un très fort vieillissement, la formulation C est nettement meilleure que le catalyseur A seul, que ce soit en termes de conversion des NOx que du traitement du N₂O.

Il reste aussi à souligner que la synergie entre la chabazite échangée ou imprégnée, tout particulièrement au cuivre, et la ferriérite échangée au fer vis-à-vis de la diminution conjointe des teneurs en NOₓ et en N₂O est ainsi démontrée, mais qu'elle est assez inattendue et surprenante, puisqu'aucun des deux catalyseurs ne paraissait, pris séparément, aptes à agir sur le taux de N₂O dans des gaz d'échappement où la teneur initiale en N₂O des gaz qui traversent le dispositif de traitement est déjà très faible et où les paramètres de débit, chaleur de l'effluent à traiter - les gaz d'échappement - changent constamment, selon les conditions de roulage, les conditions de température extérieure etc ....

D'autres exemples conformes à l'invention ont été réalisés, dans les mêmes conditions que précédemment, à ceci près que l'on a déposé sur les parois du filtre d'abord une première couche à partir de la composition (A) en Cu/CHA puis une seconde couche sur la première à partir de la composition (B) en Fe/FER, de façon à ce que, globalement sur le bicouche on ait en poids 50% de Fe/FER et 50% de Cu/CHA. On appellera ce bi-couche par la suite : exemple 3 / composition (D).

On a ensuite comparé les résultats de cette composition (D) avec un exemple 3' comparatif avec la monocouche (A) seule, à différents taux de NO/NO₂ après un vieillissement à très haute température, à savoir 950° C.

La figure 2 représente trois graphes, représentant le taux de conversion des NOX en ordonnées en pourcentage en fonction de la température en abscisse en degrés Celsius de l'exemple 3 avec la composition D Cu/CHA + Fe/FER (traits en pointillés) en comparaison avec l'exemple 3' avec la composition A seule Cu/CHA (traits pleins), avec des mélanges NO/ NO₂ présentant, de haut en bas, des ratios 80/20 ; 60/40 et 50/50.

On vérifie que l'exemple selon l'invention permet d'obtenir un taux de conversion des NOx plus élevé qu'avec la chabazite seule, et d'autant plus élevé que l'on se rapproche du ratio NO/NO₂ de 50/50. On note aussi que, quel que soit le ratio NO/NO₂, on maintient un niveau raisonnable de conversion des NOx, alors même que le bi couche a subi de très fortes sollicitations thermiques à 950° C, ce qui prouve la stabilité thermique de la composition : s'il y a pu y avoir une certaine dégradation après une telle élévation thermique, elle n'est pas totale, ce qui lui permet de continuer à fonctionner correctement par la suite.

La ferriérite contribue clairement à la performance de la composition dans son ensemble, notamment avec le ratio NO/NO₂ de 50/50, mais elle reste stable au-delà de 1000°C, et pallie donc à l'éventuelle dégradation de la chabazite quand des températures très élevées sont atteintes.

## Revendications

1. Dispositif de traitement des gaz d'échappement circulant dans une ligne d'échappement d'un moteur thermique, **caractérisé en ce qu'**il comprend un substrat poreux enduit et/ou imprégné de composition(s) catalytique(s) associant une zéolithe de structure chabazite sous forme acide échangée ou imprégnée au cuivre et/ou au fer et une zéolithe de structure ferriérite sous forme acide échangée ou imprégnée au cuivre et/ou au fer.

2. Dispositif selon la revendication précédente, **caractérisé en ce que** le substrat est un filtre à particules (1).

3. Dispositif selon l'une des revendications précédentes, **caractérisé en ce qu'**il traite les gaz NOx et N₂O des gaz d'échappement.

4. Dispositif selon l'une des revendications précédentes, **caractérisé en ce que** le rapport relatif massique entre la zéolithe de structure chabazite sous forme acide échangée ou imprégnée au cuivre et/ou au fer et la zéolithe de structure ferriérite sous forme acide échangée ou imprégnée au cuivre et/ou au fer est compris entre 90/10 et 40/60, notamment entre 80/20 et 50/50.

5. Dispositif selon l'une des revendications précédentes, **caractérisé en ce que** le pourcentage massique en chabazite sous forme acide échangée ou imprégnée au cuivre et/ou au fer par rapport à la somme des teneurs massiques de la chabazite sous forme acide échangée ou imprégnée au cuivre et/ou au fer et de la ferriérite sous forme acide échangée ou imprégnée au cuivre et/ou au fer est d'au moins 50%.

6. Dispositif selon l'une des revendications 1 à 4, **caractérisé en ce que** le pourcentage massique en chabazite sous forme acide échangée ou imprégnée au cuivre et/ou au fer par rapport à la somme des teneurs massiques de la chabazite sous forme acide échangée ou imprégnée au cuivre et/ou au fer et de la ferriérite sous forme acide échangée ou imprégnée au cuivre et/ou au fer est d'environ 50%.

7. Dispositif selon l'une des revendications précédentes, **caractérisé en ce que** la zéolithe de structure chabazite sous forme acide échangée ou imprégnée au cuivre et/ou au fer et la zéolithe de structure ferriérite sous forme acide échangée ou imprégnée au cuivre et/ou au fer sont associées dans une même composition catalytique, éventuellement à l'aide d'un liant minéral, notamment à base d'alumine, pour enduction/imprégnation commune du substrat poreux.

8. Dispositif selon l'une des revendications 1 à 5, **caractérisé en ce que** la chabazite sous forme acide échangée ou imprégnée au cuivre et/ou au fer et la ferriérite sous forme acide échangée ou imprégnée au cuivre et/ou au fer sont contenues dans deux compositions catalytiques distinctes.

9. Dispositif selon la revendication précédente, **caractérisé en ce que** la composition contenant la chabazite sous forme acide échangée ou imprégnée au cuivre et/ou au fer est disposée, dans le substrat poreux, au moins partiellement sous la composition contenant la ferriérite sous forme acide échangée ou imprégnée au cuivre et/ou au fer.

10. Procédé de fabrication du dispositif selon l'une des revendications 1 à 6 ou 8, **caractérisé en ce qu'**on enduit/imprègne le substrat poreux successivement avec une première composition catalytique contenant la zéolithe de structure ferriérite sous forme acide échangée ou imprégnée au cuivre et/ou au fer puis avec une deuxième composition catalytique contenant la zéolithe de structure chabazite sous forme acide échangée ou imprégnée au cuivre et/ou au fer.

11. Système de traitement de gaz d'échappement produits par un moteur thermique, **caractérisé en ce qu'**il comprend au moins un dispositif selon l'une des revendications précédentes, et des moyens d'introduction dans les gaz de combustion d'un agent réducteur ou d'un précurseur dudit agent réducteur.

12. Système selon la revendication précédente, **caractérisé en ce qu'**il la teneur en N₂O des gaz d'échappement est à au plus 10 ppm, et même de préférence à au plus 5 ppm.
